# DEMANDE DE BREVET EUROPEEN

(11) **EP 1 683 981 A1**
(43) Date de publication de la demande: **26.07.2006**
(21) Numéro de dépôt: 06300047.5
(22) Date de dépôt: 20.01.2006
(51) Int. Cl.: F16D 41/08

(54) **Dispositif pour établir temporairement une liaison en rotation entre deux pièces, ainsi qu'un mécanisme avec un tel dispositif**

(30) Priorité: 25.01.2005 FR 0500753
(71) Demandeur: PEUGEOT CITROËN AUTOMOBILES S.A., 78140 Velizy Villacoublay (FR)
(72) Inventeur: Robin, Benoît, 92210, Saint Cloud (FR); De Croutte, Arnaud, 78530, Buc (FR); Grathwohl, Patrick, 28170, Favieres (FR)

(57) **Abrégé**

L'invention concerne un dispositif pour établir temporairement une liaison en rotation entre deux pièces (1, 2) en rotation coaxiale l'une (2) par rapport à l'autre (1). Ce dispositif comprend un élément de blocage (5) disposé entre les deux pièces (1, 2), l'élément (5) étant conformé pour permettre d'établir la liaison en rotation entre les deux pièces (1, 2) en déplaçant l'élément (5) à partir d'une première position vers une seconde position et pour permettre de rompre la liaison en rotation entre les deux pièces (1, 2) en déplaçant l'élément (5) de la seconde position vers la première position.

L'invention concerne également un mécanisme comprenant un tel dispositif.

## Description

L'invention concerne un dispositif pour établir temporairement une liaison en rotation entre deux pièces en rotation coaxiales l'une par rapport à l'autre, ainsi qu'un mécanisme comprenant un tel dispositif.

Le mécanisme qui est à la base de la présente invention, est celui d'une roue libre, c'est-à-dire un mécanisme dans lequel une première pièce tourne coaxialement autour d'une seconde pièce, ces deux pièces pouvant être, par exemple, deux arbres, un arbre et un pignon, un arbre et une roue. Dans ce mécanisme de roue libre, on prévoit des moyens qui permettent d'établir une liaison en rotation pendant une durée prédéterminée ou pendant une durée déterminée au cours de l'utilisation du mécanisme. Selon les besoins, le mécanisme peut être bidirectionnel, auquel cas la liaison en rotation peut être établie quel que soit le sens de rotation de l'une des pièces par rapport à l'autre, ou unidirectionnel, auquel cas la liaison en rotation peut être établie lorsque les pièces tournent, l'une par rapport à l'autre, dans un sens, mais pas dans l'autre. De tels systèmes se trouvent par exemple dans des bicyclettes, dans des monte-charges à poulies ou dans des mécanismes de transmission de forces de rotation telles des boîtes de vitesses de véhicules automobiles.

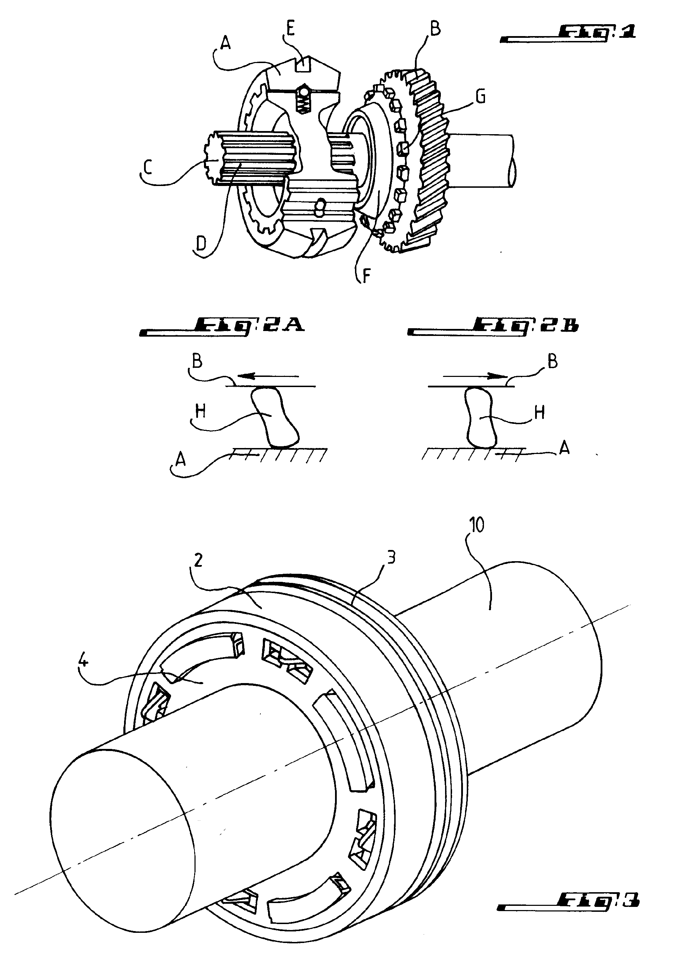

La figure 1 des dessins annexés montre un exemple d'un mécanisme synchroniseur sous la forme d'un pignon fou et d'un synchroniseur montés sur un arbre, le synchroniseur étant continuellement solidaire de l'arbre en rotation et libre en translation et le pignon fou conformé pour obtenir un des rapports de vitesses tournant librement autour du même arbre le temps qu'aucune liaison en rotation n'est établie entre ces deux pièces.

Appliquée à un mécanisme tel une boîte de vitesses d'un véhicule automobile, cette disposition peut fonctionner de la manière suivante : Pour bloquer le pignon fou par rapport au synchroniseur, il faut approcher le synchroniseur du pignon fou pour faire craboter l'un avec l'autre.

De manière générale, et quel que soit le domaine d'application du mécanisme de base de la présente invention, décrit plus haut, il s'agit chaque fois d'un mécanisme dans lequel une première pièce tourne coaxialement et librement autour d'une seconde pièce, et ces deux pièces doivent être bloquées temporairement l'une par rapport à l'autre à l'aide d'un élément de blocage conformé à cet effet. Pour obtenir l'effet escompté, l'élément de blocage doit être actionné à un premier moment pour bloquer la première pièce par rapport à la seconde, c'est-à-dire pour établir une liaison entre les deux pièces, et doit être actionné à nouveau à un deuxième moment pour rompre cette liaison, puis à un troisième moment pour établir à nouveau la liaison, et ainsi de suite.

Ainsi, chaque fois que l'élément de blocage est actionné, il change de position. Selon l'exemple de la figure 1, le synchroniseur - remplissant la fonction d'un élément de blocage destiné à bloquer le pignon fou par rapport à l'arbre - est translaté axialement d'une position de non engagement avec le pignon fou vers une position d'engagement avec ledit pignon et vive versa. Cette translation est obtenue, par exemple, à l'aide d'une fourchette engagée dans une rainure annulaire extérieure prévue à cet effet sur le pourtour du pignon de gauche. La fourchette elle-même est actionnée par une tringlerie ou par tout autre moyen approprié pouvant être commandé directement ou indirectement par l'utilisateur d'une machine, d'un outil ou d'un véhicule dans lequel le mécanisme est installé.

Cependant, quelle que soit l'application d'un tel mécanisme, le volume nécessaire pour l'installer est augmenté, parfois même sensiblement, du volume nécessaire pour installer les moyens de commande moyennant lesquels l'utilisateur du mécanisme actionne l'élément de blocage dudit mécanisme.

En effet, lorsque l'élément de blocage est actionné par une fourchette, cette fourchette est fixée souvent sur une tige montée de manière à pouvoir déplacer la fourchette dans un sens et dans l'autre le long de l'axe de l'arbre portant les deux pièces. La fourchette peut également être montée basculant sur un axe disposé transversalement par rapport à l'axe de l'arbre. En ce cas, le pivotement de la fourchette entraînant le déplacement de la pièce de gauche dans un sens ou dans l'autre, est obtenu par une tringlerie ou par des moyens électromagnétiques ou encore par des moyens hydrauliques tels qu'un vérin, pour ne citer que quelques exemples.

Par ailleurs, le fait d'utiliser non pas une seule pièce de transmission de commandes entre une manette ou un autre organe d'actionnement et l'élément de blocage, mais plusieurs pièces formant une chaîne de transmission de commandes, où chacun des éléments de cette chaîne de transmission est monté sur l'élément adjacent avec un jeu nécessaire au fonctionnement des éléments, entraîne des jeux croissants au fur et à mesure que le mécanisme s'use. De plus, les différents éléments de la chaîne de transmission subissent parfois des contraintes telles que des flexions, ce qui risque d'engendrer des déformations ou aberrations de la commande initialement donnée pour établir ou pour rompre la liaison. A ces déformations éventuellement croissantes s'ajoutent, par exemple dans une boîte de vitesses utilisée dans un véhicule automobile, le temps nécessaire de synchronisation, c'est-à-dire le temps nécessaire, lors de chaque établissement d'une liaison entre les deux pièces, pour mettre les deux pièces à la même vitesse de rotation avant d'établir la liaison.

Ainsi, des mécanismes traditionnels de transmission d'une force de rotation moyennant un mécanisme comprenant une première pièce tournant librement et coaxialement autour d'une seconde pièce, se révèlent souvent être des systèmes encombrants et risquant d'entraver le bon fonctionnement et la durée de vie du mécanisme.

Aussi, le but de l'invention est d'améliorer les mécanismes de transmission de forces de rotation comportant deux pièces en rotation coaxiale l'une par rapport à l'autre et destinées à être liées l'une à l'autre temporairement, de manière à obtenir un mécanisme plus compact, plus fiable et, si possible, moins exposées aux risques d'un ralentissement de sa vitesse de réaction avec le temps de service.

Le but de l'invention est atteint avec un dispositif pour établir temporairement une liaison en rotation entre deux pièces en rotation coaxiale l'une par rapport à l'autre, qui comprend au moins un élément de blocage disposé entre les deux pièces, l'élément de blocage étant conformé pour permettre d'établir la liaison en rotation entre les deux pièces en déplaçant l'élément de blocage à partir d'une première position vers une seconde position et pour permettre de rompre la liaison en rotation entre les deux pièces en déplaçant l'élément de blocage de la seconde position vers la première position.

Selon le principe de la présente invention, il ne s'agit plus d'approcher l'une des deux pièces à l'autre pour obtenir une liaison en rotation entre elles, mais de pourvoir une des deux pièces d'un ou de plusieurs éléments de blocage qui sont disposés entre les deux pièces de manière que seuls les éléments de blocage et non plus la pièce entière changent de position pour établir la liaison entre les deux pièces ou, lorsqu'un changement est nécessaire, pour rompre cette liaison.

Ainsi, il est concevable d'avoir deux arbres dont au moins un est creux et tourne coaxialement autour de l'autre et que ces deux arbres soient reliés l'un à l'autre moyennant des éléments de blocage disposés sur un des deux arbres et que ces éléments de blocage soient actionnés de manière à établir la liaison pendant une certaine durée.

Il va sans dire que les éléments de blocage peuvent être disposés sur l'une ou sur l'autre des deux pièces à relier. Bien qu'il s'avère en général plus facile, au point de vue de l'architecture et au point de vue du montage, de disposer les éléments de blocage sur celle des deux pièces à partir de laquelle les forces de rotation doivent être transmises sur l'autre pièce, il est néanmoins possible de disposer les éléments de blocage sur celle des deux pièces qui tourne librement autour ou à l'intérieur de l'autre et qui est destinée à recevoir, après établissement de la liaison avec l'autre pièce, les forces de rotation.

Un autre exemple de réalisation est celui d'une roue tournant librement autour d'un arbre, où la roue est liée à l'arbre, en rotation, le temps que la roue doit transmettre une force de rotation à une autre roue ou à un autre élément tournant. Ainsi, à titre d'exemple, le moyeu d'une roue est rendu solidaire avec un arbre d'entraînement sur lequel elle est montée, le temps que cet arbre tourne dans un sens ; et cette roue n'est plus liée à l'arbre lorsque l'arbre tourne dans le sens inverse. Des applications correspondantes se trouvent dans des bicyclettes ou dans des monte-charges à poulie et bien d'autres machines.

Encore un autre exemple d'application du principe de la présente invention est celui d'un pignon tournant librement sur un arbre. Dans ce cas, l'arbre, sur lequel le pignon est monté, transmet des forces de rotation sur le pignon le temps que le pignon est embrayé sur l'arbre. Lorsque le pignon est débrayé, il n'y a plus de transmission de forces de rotation de l'arbre vers le pignon. Une variante de cette disposition est celle de la disposition de deux ou plusieurs pignons sur un arbre d'une boîte de vitesse, où des moyens de blocage sont conçus et disposés de manière à permettre de lier en rotation alternativement l'une ou l'autre des deux ou d'avantage de pignons disposés sur l'arbre.

La présente invention concerne également les caractéristiques suivantes, considérées isolément ou selon toutes leurs combinaisons techniquement possibles :
- les éléments de blocage sont des cames ;
- les éléments de blocage sont des rouleaux ;
- les éléments de blocage sont conformés et montés de manière à permettre d'établir et de rompre la liaison en rotation entre les deux pièces quel que soit le sens de rotation relatif entre les deux pièces ;
- le dispositif comprend un actionneur destiné à faire changer les éléments de blocage de position entre la première et la seconde position ;
- l'actionneur est un élément ayant sensiblement la forme d'un cylindre circulaire creux destiné à être monté coaxialement par rapport aux deux pièces, et au moins partiellement entre les deux ;

Le but de l'invention est également atteint avec un mécanisme qui comprend des moyens permettant d'obtenir un rapport par blocage en rotation d'un pignon fou disposé sur un arbre de la boîte de vitesses par rapport à ce même arbre, les moyens étant constitués par un dispositif dont la description est faite plus haut et dans lequel les deux pièces en rotation coaxiale l'une par rapport à l'autre sont le pignon fou et l'arbre sur lequel le pignon fou est disposé.

D'autres caractéristiques et avantages de la présente invention ressortiront de la description ci-après de deux modes de réalisation du dispositif de l'invention. Cette description est faite en référence aux dessins dans lesquels :
- la figure 1 montre un mécanisme de transmission d'une force rotative, utilisé avant l'invention,
- les figures 2A et 2B montrent, de manière très schématisée, le principe de fonctionnement des éléments de blocage du dispositif de l'invention,
- la figure 3 montre un ensemble de deux pièces montés sur un même arbre et destinés à être mis en liaison ou non selon l'invention,
- la figure 4 montre l'ensemble de la figure 3 en une vue éclatée,
- la figure 5 montre en détail une des deux pièces de l'ensemble de la figure 3,
- la figure 6 montre une rondelle destinée à être rassemblée avec le porte-cames de la figure 5,
- la figure 7 montre en détail l'actionneur du dispositif de la figure 3,
- la figure 8 montre la disposition de l'actionneur de la figure 7 sur la pièce de la figure 5 en position de blocage,
- la figure 9 montre la disposition de l'actionneur de la figure 7 sur la pièce de la figure 5 en position "roue libre",
- les figures 10A, 10B, 10C montrent la position d'un élément de blocage du dispositif de l'invention successivement lorsque les deux pièces ne sont pas en liaison l'une avec l'autre, lorsque l'élément de blocage commence à entrer en contact avec la pièce libre, et lorsque le moyen de blocage est entièrement engagé sur la pièce libre et bloque ainsi la première pièce entièrement par rapport à la seconde,
- la figure 11 montre, par extrait, une variante de réalisation d'un agencement d'éléments de blocage à rouleaux selon l'invention, et
- les figures 12A et 12B montrent, en une vue en coupe transversale simplifiée, respectivement la position de rouleau libre et la position de rouleau bloqué, d'une roue libre classique.

Le mécanisme de transmission qui est à la base de la présente invention, comprend, par exemple, comme cela est représenté sur la figure 1, une première pièce A et une seconde pièce B disposées toutes les deux sur un arbre C. La pièce A est solidaire en rotation avec l'arbre C. Ce mode de fixation est obtenu moyennant des cannelures D pratiquées dans l'arbre C et, de manière complémentaire dans l'évidement de la pièce A qui est traversé par l'arbre C. Ce mode de fixation permet une translation de la pièce A le long de l'axe de l'arbre C, mais empêche toute rotation de la pièce A autour de l'arbre C.

Contrairement à cela, la pièce B est disposée sur l'arbre C de manière à pouvoir tourner coaxialement et librement autour de l'arbre C. La pièce B ne peut toutefois pas se déplacer axialement.

Pour établir une liaison en rotation entre les pièces A et B, un moyen de commande (non représenté) engrainant dans une rainure annulaire E de la pièce A déplace cette dernière axialement vers la pièce B jusqu'à ce qu'il y ait contact entre ces deux pièces. Pour éviter un engagement brutal de la pièce A sur la pièce B, la pièce B est généralement pourvue de moyens de synchronisation F permettant d'adapter la vitesse de la pièce B de manière progressive à la vitesse de rotation de la pièce A. Lorsque les pièces A et B sont suffisamment synchronisées, la pièce A peut s'approcher de manière suffisante de la pièce B pour permettre à des moyens de crabotage G de s'engager dans des évidements appropriés pratiqués dans la pièce A et d'établir ainsi une liaison en rotation entre les pièces A et B.

Lorsqu'il s'agit de rompre la liaison entre les pièces A et B, la pièce A est éloignée axialement de la pièce B, ce qui entraîne le désengagement des moyens de crabotage G de la pièce A et une rotation libre de la pièce B autour de l'arbre C.

Un mécanisme de transmission, tel que celui représenté sur la figure 1, présente un certain encombrement aussi bien en longueur axiale qu'en largeur ou extension diamétrale.

Selon cet agencement, l'étendue axiale, par exemple, d'une boîte de vitesses comportant plusieurs pièces A et plusieurs pièces B, est fonction de la largeur des éléments de synchronisation F et donc de la course de déplacement de la pièce A pendant la phase de synchronisation entre les pièces A et B. Un autre élément technique ayant une influence sur l'étendue axiale est la course axiale nécessaire de la pièce A pour faire engager les moyens de crabotage G dans la pièce B. Il s'en suit qu'une réduction de la longueur du mécanisme de transmission avec les pièces A et B pourrait consister à utiliser d'autres moyens de synchronisation et de crabotage que ceux utilisés jusqu'à maintenant.

Même si cela n'est pas représenté sur la figure 1, il est aisément compréhensible que l'étendue transversale du mécanisme de transmission, par rapport à la direction axiale de celui-ci, est déterminée non seulement par les dimensions des pièces A et B, mais aussi par les dimensions des éléments de commande nécessaires pour obtenir la translation de la pièce A le long de l'axe de l'arbre C. Il s'en suit que l'on pourrait donc obtenir une réduction des dimensions transversales du dispositif de transmission, Quelle que soit l'étendue axiale du mécanisme de transmission, en remplaçant les moyens commandant la translation de la pièce A soit par des moyens moins encombrants, soit par des moyens s'engageant autrement que dans la périphérie de la pièce A.

Le dispositif de l'invention permet de réduire l'encombrement global du mécanisme.

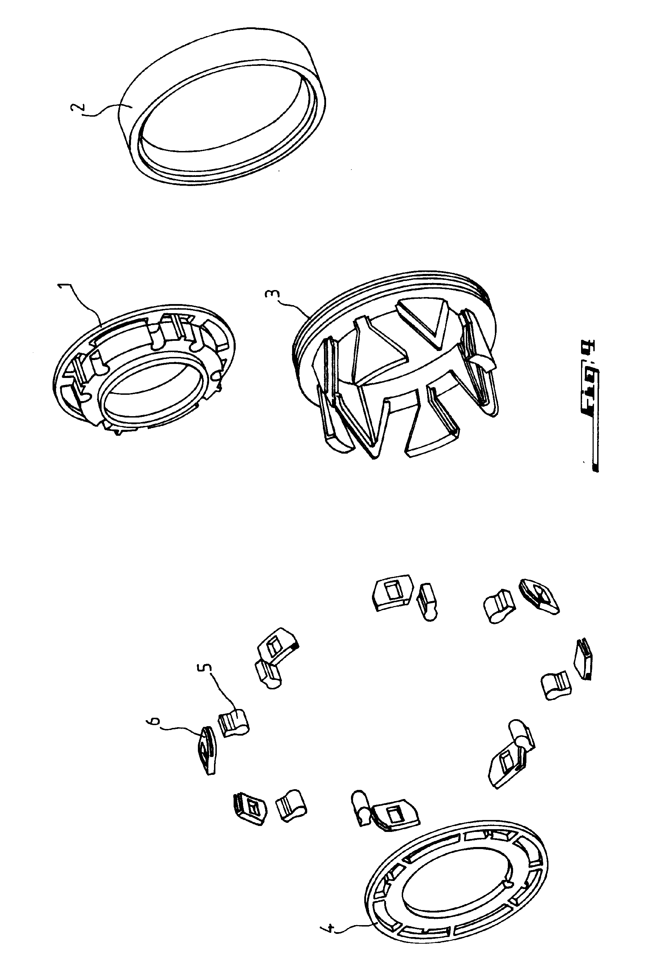

Le dispositif de l'invention est fondé sur le principe de fonctionnement représenté sur la figure 2. Selon ce principe, les deux pièces entre lesquelles une liaison en rotation doit être établie, ne sont pas disposées en regard l'une de l'autre sur le même axe, mais elles sont conformées de manière à ce que l'une des deux pièces tourne coaxialement autour de l'autre pièce et à ce que les deux pièces se chevauchent au moins partiellement, selon une vue radiale sur l'ensemble des deux pièces. Afin d'obtenir un blocage entre les deux pièces, un ou plusieurs éléments de blocage sont disposés entre les deux pièces et sont conformés de manière à pouvoir établir la liaison en rotation entre les deux pièces par un déplacement du ou des éléments de blocage dans une première position et de manière à permettre de rompre la liaison en rotation entre les deux pièces en déplaçant le ou les éléments de blocage dans une seconde position.

Alors que les éléments de blocage des mécanismes de transmission utilisés avant l'invention ont effectué leur changement de position uniquement en se déplaçant dans un sens parallèle à l'étendue de l'axe de l'arbre sur lequel les pièces sont disposées, le changement de position des éléments de blocage du dispositif de l'invention comprend, outre le déplacement axial, une composante radiale essentielle pour la mise en oeuvre du principe de l'invention.

En effet, comme cela est représenté sur les figures 2A et 2B, la pièce A, qui est solidaire de l'arbre C et sur lequel doit être bloquée la pièce D, est pourvue d'une came H montée basculante sur la pièce A. Durant le temps mis pour que la pièce B tourne librement, temps pendant lequel il n'est donc pas souhaité qu'une liaison entre les pièces A et B soit établie, la came H prend une position de repos penchée comme cela est représenté à la figure 2A.

Grâce à cette position penchée en avant dans le sens du mouvement relatif de la pièce B par rapport à la pièce A, symbolisé par une flèche allant de droite à gauche sur la figure 2A, la came tend à se coucher et autorise ainsi un libre mouvement de la piste de la pièce B par rapport à la piste de la pièce A.

Lorsque, par contre, il est recherché d'établir une liaison entre les pièces A et B, comme illustré à la figure 2B, la came bascule autour d'un axe de basculement et se met en porte à faux,bloquant le mouvement de la piste de la pièce B par rapport à la piste de la pièce A, symbolisé par une flèche allant de gauche à droite.

Le principe de la présente invention peut avoir de nombreuses applications dans le domaine automobile ou autre. Parmi ces applications, on peut avoir différentes dispositions et notamment les deux suivantes.

Selon une première disposition, on monte deux roues sur le même axe et axialement espacées l'une de l'autre. Dans l'espace entre les deux roues, on dépose un mécanisme comprenant une ou plusieurs cames montées chacune autour d'un axe disposé sensiblement radialement par rapport à l'axe commun des roues.

Selon une deuxième disposition, on monte deux roues ayant des diamètres différents coaxialement sur le même axe. Les deux roues sont formées de manière à se chevaucher au moins partiellement. Cette disposition crée donc un espace sensiblement annulaire dans lequel on place une ou plusieurs cames. Selon le principe de la présente invention, les cames peuvent être disposées aussi bien sur la pièce B que sur la pièce A. Toutefois, la pièce B étant montée en rotation libre autour de l'axe commun des pièces A et B, il sera en général plus facile d'installer et de faire fonctionner des moyens de commande agissant sur les cames lorsque ces cames sont montées sur la pièce A.

L'une ou l'autre de ces deux dispositions permettent d'obtenir un blocage de la pièce B sur la pièce A lorsque la ou les cames H agissent sur la pièce B tournant initialement librement. De plus, ces dispositions permettent, lorsque la pièce B est bloquée sur la pièce A, de rompre la liaison entre les deux pièces lorsque la pièce B effectue un mouvement plus rapide par rapport à celui de la pièce A.

Ces dispositions de l'invention selon lesquelles la liaison entre les deux pièces A et B est obtenue par des cames, permettent par ailleurs d'obtenir un blocage de la pièce B sur la pièce A dans les deux sens d'un mouvement relatif de l'une par rapport à l'autre pièce. En effet, en insérant deux cames, ou deux ensembles de cames, entre les pièces A et B, qui tendent à se coucher dans des sens opposés lorsque la pièce B ne doit pas être bloquée par rapport à la pièce A, on peut obtenir le blocage d'une pièce par rapport à l'autre, en agissant sur l'une ou sur l'autre des deux cames, ou sur l'un ou sur l'autre des deux ensembles de cames, selon la direction relative des mouvements de ces deux pièces.

Dans la suite, le principe de la présente invention sera expliqué à l'aide d'un premier mode de réalisation selon lequel la pièce intérieure A est pourvue de plusieurs cames H, tendant toutes à se coucher dans le même sens, et destinées à bloquer une pièce B extérieure.

Le principe de la présente invention sera également expliqué à l'aide d'un second mode de réalisation selon lequel la pièce intérieure est pourvue de plusieurs rouleaux produisant un effet comparable à celui des cames.

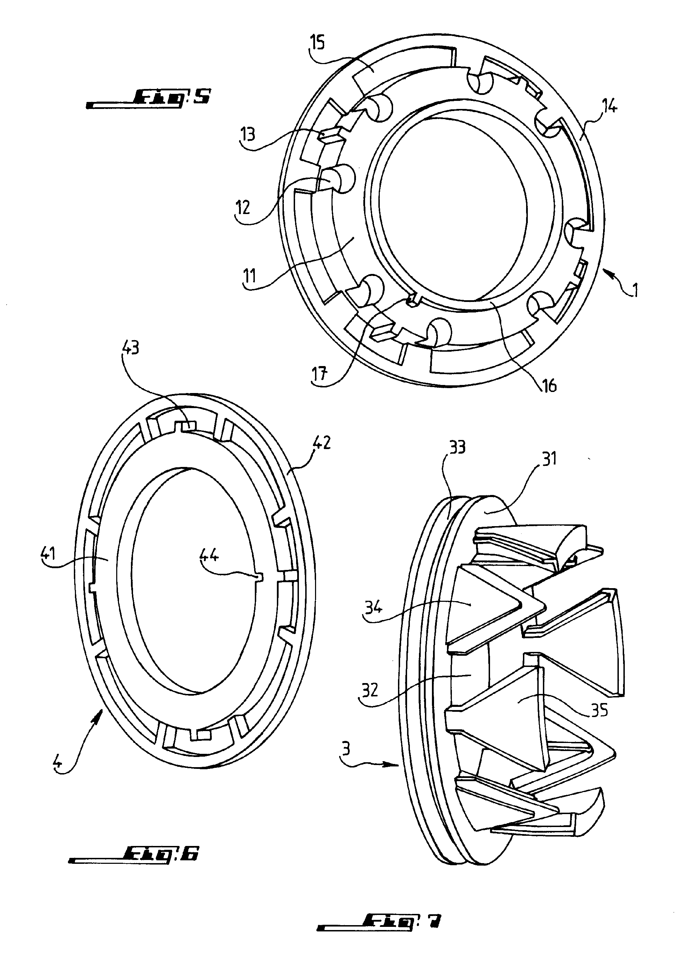

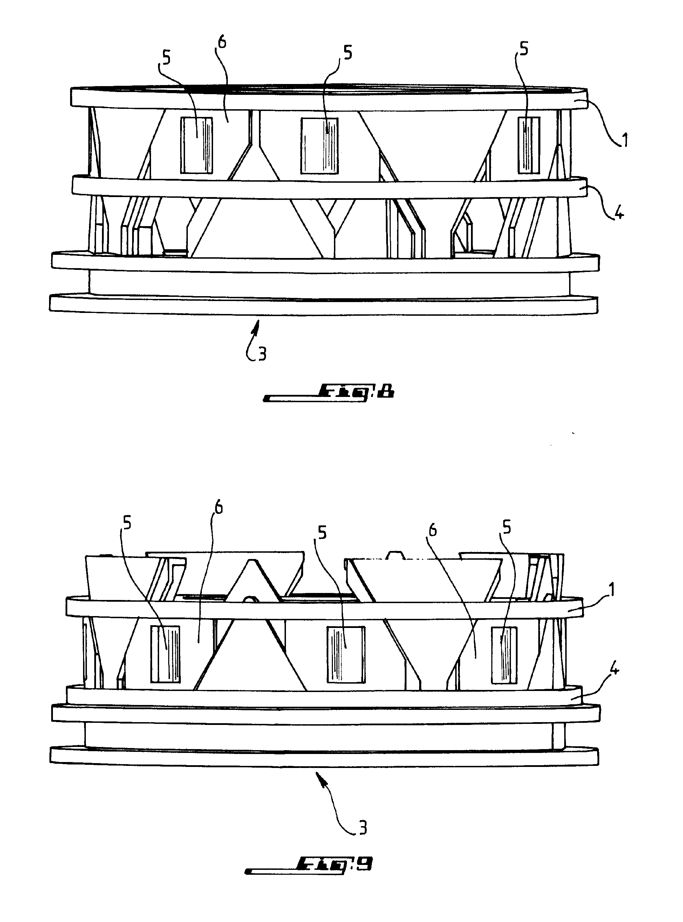

Les figures 3 et 4 montrent respectivement selon une vue d'ensemble et une vue éclatée, un porte-cames 1 (pièce A), un pignon 2 (pièce B), et un actionneur 3 montés coaxialement sur un arbre 10 (arbre C). Le porte-cames 1 est monté solidaire en rotation sur l'arbre 10 et est entouré coaxialement par le pignon 2 monté libre en rotation. Dans un espace annulaire délimité de l'intérieur par le pourtour du porte-cames 1, et de l'extérieur par une piste intérieure du pignon 2, est logée une partie de l'actionneur 3. L'actionneur 3 est monté axialement mobile de manière qu'il puisse se rapprocher ou s'éloigner axialement du pignon 2 pour établir ou rompre une liaison entre les pièces 1 et 2 comme cela sera détaillé ci-après. Le pignon 2 est retenu sur le porte-cames 1 moyennant une rondelle 4 du porte-cames 1.

Pour obtenir un blocage du pignon 2 sur le porte-cames 1, le porte-cames 1 porte des cames 5 montées en basculement dans des logements appropriés répartis sur le pourtour du porte-cames 1. Afin de pouvoir obtenir le basculement des cames 5, des entretoises 6 sont enchâssées sur les têtes des cames 5 correspondantes. Les entretoises 6 sont conformées pour pouvoir être insérées entre des pistes formées sur l'actionneur 3 à l'aide desquelles les entretoises se déplacent à la fois axialement et le long du pourtour du porte-cames 1 pour faire basculer les cames 5 d'une position de repos vers une position de blocage.

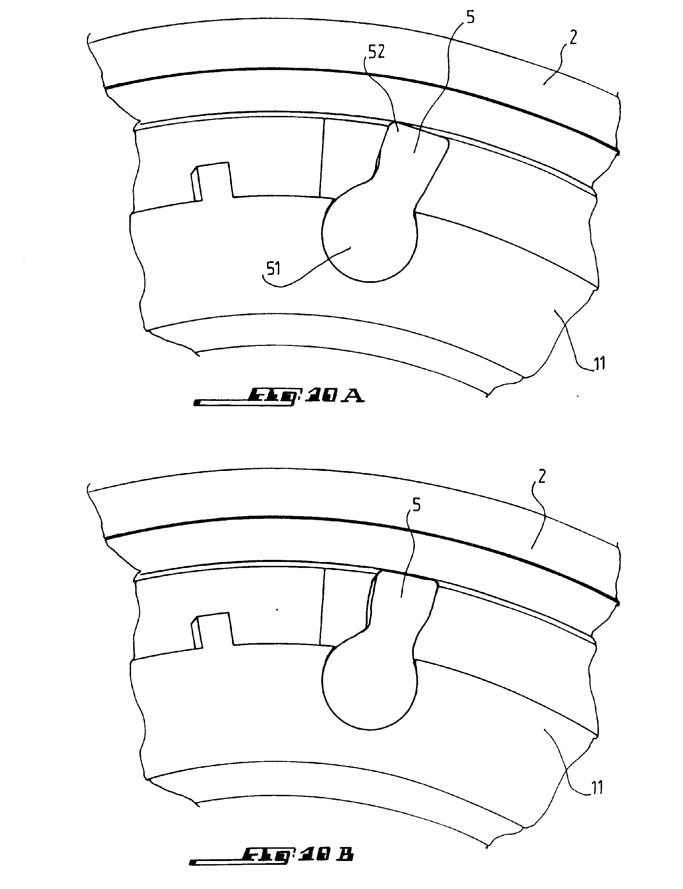

La figure 5 montre en détail le porte-cames 1 en une vue en perspective du côté où se trouve la rondelle 4. Le porte-cames comprend un corps 11 avec, sur le pourtour du corps de rouleau, des encoches approximativement cylindriques 12 dont chacune est destinée à recevoir un corps cylindrique 51 d'une came 5 (voir figure 10A). Les encoches 12 sont conformées pour recevoir les cames 5 de manière à leur permettre de basculer comme cela est représenté en plus de détails sur les figures 10A, 10B, 10C.

Le pourtour du corps 11 comprend par ailleurs quatre rails 13 répartis autour de la circonférence du corps 11 et orientés parallèlement à l'axe du porte-cames 1. Les rails 13 sont destinés à guider l'actionneur 3 lorsqu'il agit sur les cames 5.

Afin de pouvoir réaliser l'assemblage représenté sur la figure 3, le porte-cames 1 est rehaussé, sur un de ses côtés, d'une paroi annulaire 14 comportant des évidements 15. Sur le côté opposé, le rouleau 1 comprend, en bordure de l'évidement central du rouleau 1, une couronne d'élargissement 16 pourvue d'un doigt 17. La couronne 16 est destinée à recevoir la rondelle 4 lors du montage du mécanisme. Le nez 17 sert comme indexation et se loge dans une encoche correspondante de la rondelle 4 lors de son assemblage avec le rouleau 1.

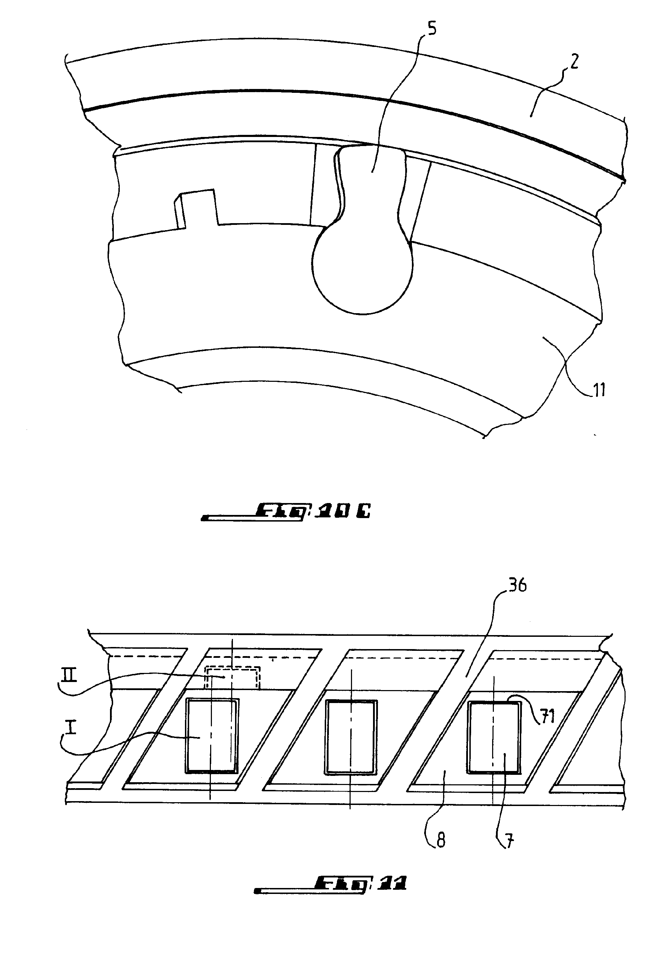

La figure 6 montre la rondelle 4 qui est destinée à être montée sur le rouleau 1 après la mise en place des cames 5 sur le rouleau 1. La conception de la rondelle 4 reprend essentiellement la configuration du bord rehaussé du rouleau 1. Ainsi, la rondelle 4 comprend un corps de rondelle 41 dont les dimensions radiale et diamétrale correspondent à celles du rouleau 1, un bord rehaussé 42, des rails 43 correspondant en nombre et en dimensions radiales à celles des rails 13 du rouleau 1, ainsi qu'une gorge 44 destinée à recevoir le doigt 17 du rouleau 1.

Le montage de l'ensemble formé par le porte-cames 1, le pignon 2, l'actionneur 3, la rondelle 4, et les cames 5 et entretoises 6 est effectué comme suit : sur le porte-cames 1, et plus particulièrement dans les encoches 12, sont insérées les cames 5. Chaque came est insérée conformément aux formes complémentaires de son corps 51 (pignon fou) et des encoches 12. Ensuite, les entretoises 6 sont enchâssées sur des têtes 52 des cames 5 correspondantes (voir figure 10A). Puis, on met en place le pignon 2 autour du porte-cames 1. Ainsi, le pignon 2 coiffe les cames 5 et les entretoises 6. Enfin, on rapporte la rondelle 4 du porte-cames 1 et fixe la rondelle 4 sur le porte-cames 1, par exemple par une soudure. Afin de permettre au pignon 2 de tourner librement par rapport au porte-cames 1, et notamment afin d'éviter que le pignon 2 entre en contact avec les cames 5 lorsque celles-ci sont dans leur position de repos, le pignon 2 est pourvu en son intérieur, aux bords de la piste intérieure du rouleau 2, de deux épaulements destinés de prendre appui respectivement sur le pourtour du bord rehaussé 14 du porte-cames 1 et sur le pourtour du bord rehaussé 42 de la rondelle 4.

Lorsque l'assemblage est réalisé, l'actionneur 3 est rapporté en veillant à faire passer chacune des entretoises 6 dans un guidage correspondant de l'actionneur 3 décrit ci-après en détail. L'ensemble ainsi constitué peut être monté d'emblé sur l'arbre 10. La liaison entre l'arbre 10 et le porte-cames 1, qui est une liaison fixe en rotation, est obtenue, par exemple, par des cannelures pratiquées de manière complémentaire dans les deux pièces.

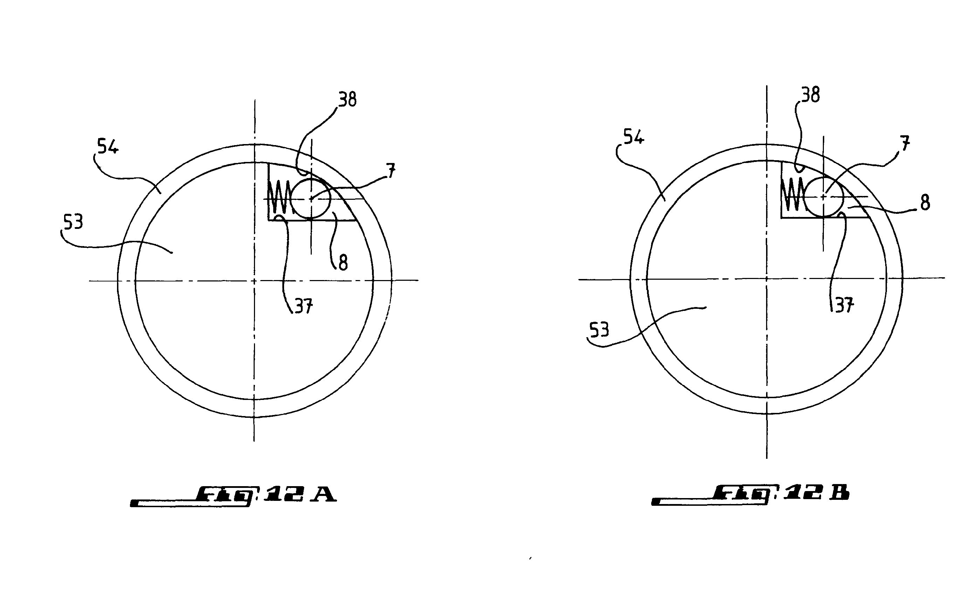

La figure 7 représente en détail l'actionneur 3. Celui-ci comprend un corps 31 en forme de disque avec un évidement 32 axial permettant de le monter axialement coulissant sur l'arbre 10, et comportant une gorge annulaire 33. Dans le mopde de réalisation représenté, l'actionneur 3 comprend des pattes 34, 35 s'étendant à la façon de segments d'un cylindre circulaire droit creux à partir du corps 31 dans une même direction axiale. Selon une variante de réalisation, non réalisée, les pattes 34, 35 s'étendent en sailliede part et d'autre du corps 31, donc dans deux directions axiales opposées.

Chacune des pattes 34, 35 ayant une forme sensiblement trapézoïdale, les pattes sont fixées alternativement avec leur grande base (pattes 34) ou avec leur petite base (pattes 35) et avec un espacement entre deux pattes successives, sur le pourtour du corps 31 de l'actionneur 3.

Cette disposition des pattes 34 et 35 permet d'obtenir, sur chacun des deux côtés du corps 31 de l'actionneur 3 et, le cas échéant, avec une disposition différente des pattes sur chacun des deux côtés, à la fois des paires de moyens de guidages parallèles et des paires de moyens de guidage alternativement orientées dans une première direction et dans une seconde direction, toutes les deux obliques et symétriques par rapport à la direction axiale de l'ensemble.

Avec cette disposition où chaque paire de moyens de guidage est destinée à recevoir un entretoise 6 correspondante, le dispositif peut actionner, comme déjà évoqué plus haut, l'un ou l'autre des deux ensembles de cames 5, selon la direction relative du mouvement du rouleau 2 par rapport au rouleau 1.

Selon une variante de réalisation représentée sur la figure 11, des rouleaux 7 sont insérés entre des paires de guidages 36 de même orientation lorsque l'on utilise des rouleaux 7 à la place de cames 5. Une disposition comparable peut, bien sur, être choisie lorsque les éléments de blocage du dispositif de l'invention sont constitués par des cames.

L'ensemble formé par le porte-cames 1, pignon 2 et l'actionneur 3 avec les cames 5 et les entretoises 6 fonctionne de la manière suivante.

Lorsque l'on cherche à établir une liaison entre le porte-cames 1 et le pignon 2, on fait translater l'actionneur 3 vers le pignon 2 à bloquer. Par cette translation, les cames 5 effectuent, à partir de leur première position, dite position de repos, un basculement, grâce auquel les têtes des cames effectuent, outre un mouvement le long du pourtour du porte-cames 1, un mouvement radial vers la piste intérieur du pignon 2.

Dès que les têtes 52 des cames 5 entrent en contact avec le pignon 2, la piste intérieure de celui-ci entraîne les têtes, en plus de leur mouvement commandé ou piloté, vers une seconde position, dite position de blocage, du pignon 2 sur le porte-cames 1, et par là sur l'arbre 10.

Pour rompre cette liaison entre le porte-cames 1 et le pignon 2, il suffit de faire translater l'actionneur 3 dans la direction opposée par rapport à la translation précédente et de faire ainsi basculer les cames 5 vers la position de repos.

Selon un fonctionnement alternatif, toute augmentation de la vitesse de rotation du pignon 2 par rapport au porte-cames 1 fait basculer les cames vers leur position de repos et romp ainsi la liaison entre le porte-came 1 et le pignon 2.

Pour faire translater l'actionneur 3, il y a plusieurs possibilités. La première est celle évoquée sur la figure 7 par la gorge annulaire 33. Un pré-actionneur, par exemple une fourchette, engagée dans la gorge 33 est mû de manière à faire translater l'actionneur 3. Une autre possibilité est celle d'une tige parallèle à l'axe de l'arbre 10, actionnée elle-même par des moyens électromagnétiques ou hydrauliques. Une autre possibilité encore est celle d'une commande intérieure hydraulique de l'actionneur 3.

Les figures 8 et 9 montrent l'ensemble formé par le porte-cames 1 et l'actionneur 3 en une vue transversale par rapport à l'axe du porte-cames 1, respectivement dans une première position de l'actionneur 3 dans laquelle les éléments de blocage, ici les cames 5, bloquent le pignon non dessiné par rapport au porte-cames 1 et dans une seconde position de l'actionneur 3 dans laquelle les éléments de blocage sont en retrait par rapport au pignon non dessiné. Lorsque l'actionneur 3 est dans la première position, une liaison en rotation entre le porte-cames 1 et le pignon 2 est établie et le pignon 2 tourne autour de l'arbre 10 avec la même vitesse de rotation que celle de l'arbre.

Lorsque l'actionneur 3 est dans la seconde position, la liaison en rotation entre le porte-cames 1 et le pignon 2 est soit rompue, soit non encore établie et le pignon 2 tourne avec une vitesse de rotation indépendante de celle du porte-cames 1.

Lors du changement de l'actionneur 3 de la première à la seconde position, les entretoises 6 glissent le long des guidages de l'actionneur dans une directionoblique par rapport à la direction axiale.

En effet, les éléments de blocage ne pouvant pas translater axialement, les entretoises sont également tenues (axialement) en place. Par contre, les moyens de guidages forment un angle avec la direction axiale de l'actionneur 3, les têtes des cames, par le basculement des cames dans les logements du porte-cames 1, décrivent une translation de long du pourtour du porte-cames 1. Ce mouvement est inversé, lorsque l'actionneur 3 retourne dans sa première position.

Le changement de position entre la première et la seconde position est représenté par un élément de blocage constitué par une came 5 sur les figures 10A, 10B et 10C.

Lorsque les éléments de blocage sont constitués par des cames 5, chacune des cames est maintenue dans une position oblique ou quasiment couchée par rapport à une direction radiale définie sur le porte-cames 1, porteur des cames 5 (fig 10A). Ainsi, lorsque le porte-cames 1 tourne par rapport au pignon 2, les têtes des cames décrivent un cercle dont le diamètre est inférieur au diamètre de la piste circulaire avec laquelle les têtes des cames doivent entrer en contact pour bloquer le pignon 2.

La figure 11 représente une vue partielle d'un agencement d'éléments de blocage selon une variante de réalisation de l'invention. En effet, comme cela est indiqué plus haut, l'utilisation décrite ci avant de cames comme éléments de blocage n'est qu'une solution technique parmi d'autres. Une autre solution consiste à utiliser des rouleaux 7 tenus dans des cages 8 insérés entre des paires de moyens de guidages 37, 38 de même orientation ; cette orientation formant un angle aigu avec l'orientation des axes des rouleaux 7.

Grâce à cette disposition de montage, les rouleaux 7 sont montés axialement mobiles de manière à pouvoir être déplacés entre une première position I, dite de non engagement entre le moyeu 53 et le pignon 54, et une seconde position II, dite d'engagement entre le moyeu 53 et le pignon 54. Lorsque les rouleaux 7 se trouvent dans leur première position I, ils peuvent tourner librement sur leurs pistes de support 37 aménagées sur le moyeu 53. En effet, selon le diamètre d'une contre-piste 38 aménagée sur la face intérieure du pignon 54, les rouleaux 7 sont soit entièrement libres et ne tournent pas, soit en contact permanent affleurant avec cette contre-piste 38 et tournent à une vitesse aléatoire, mais sans pouvoir transmettre le moindre effort du moyeu 53 au pignon 54.

Lorsque les rouleaux 7 ont été mûs vers leur seconde position II, ils sont en appui sur la contre-piste 38, par exemple grâce à une légère inclinaison des pistes 37 et 38 l'une par rapport à l'autre. Dans ce cas, la vitesse de rotation du pignon 54 étant au début inférieure à celle du moyeu 53, la piste 38 tire les rouleaux 7 vers l'extérieur ou, autrement dit, dans l'angle aigu formé par les deux pistes 37, 38 pour les y bloquer. Lorsque les rouleaux 7 sont bloqués, ils forment une liaison rigide, certes amovible, entre le moyeu 53 et le pignon 54 et maintiennent ainsi le pignon 54 à la même vitesse de rotation que le moyeu 53.

Le changement des rouleaux 7 de la première position I vers leur seconde position II se fait avantageusement moyennant un vérin ou tout autre moyen susceptible de pouvoir faire translater les rouleaux 7 axialement suivant une commande de changement de position donnée mécaniquement ou électriquement. En rapprochant les pistes 37 , 38 sous un faible angle, on donne au dispositif de l'invention deux caractéristiques avantageuses. La première est celle d'un effet de synchronisation, correspondant sensiblement à celui traditionnellement obtenu par des bagues de synchronisation : le pignon 54 est accéléré jusqu'à ce qu'il atteigne la même vitesse de rotation que le moyeu 53 avant d'établir la liaison rigide recherchée entre le moyeu 53 et le pignon 54.

La seconde caractéristique est celle d'une portance du rouleau 7 sur pratiquement la largeur entière du rouleau. En effet, si l'inclinaison de la piste 37 par rapport à celle de la contre-piste 38 est trop forte, les rouleaux 7 se rapprochent de la piste 38 presque exclusivement en biais, c'est-à-dire avec leur seul bord 71. Si, de plus, les rouleaux 7 ont une enveloppe cylindrique strictement droite et non pas, par exemple une enveloppe convexe, les rouleaux 7 ne prennent appui sur la contre-piste 38 que par leur bord 71 et risquent de subir, comme conséquence, assez vite une usure remarquable.

## Revendications

1. Dispositif pour établir temporairement une liaison en rotation entre deux pièces (1, 2) en rotation coaxiale l'une (2) par rapport à l'autre (1),
**caractérisé en ce qu'**il comprend un élément de blocage (5) disposé entre les deux pièces (1, 2), l'élément de blocage (5) étant conformé pour permettre d'établir la liaison en rotation entre les deux pièces (1, 2) en déplaçant l'élément de blocage (5) à partir d'une première position vers une seconde position et pour permettre de rompre la liaison en rotation entre les deux pièces (1, 2) en déplaçant l'élément de blocage (5) de la seconde position vers la première position.

2. Dispositif selon la revendication 1, **caractérisé en ce que** l'élément de blocage est une came (5).

3. Dispositif selon la revendication 1, **caractérisé en ce que** l'élément de blocage est un rouleau (7).

4. Dispositif selon l'une quelconque des revendications 1 à 3, **caractérisé en ce que** les éléments de blocage (5 ; 7) sont conformés et montés de manière à permettre d'établir et de rompre la liaison en rotation entre les deux pièces (1, 2) quel que soit le sens de rotation relatif entre les deux pièces (1, 2).

5. Dispositif selon l'une quelconque des revendications 1 à 4, **caractérisé en ce qu'**il comprend un actionneur (3) destiné à faire changer les éléments de blocage (5 ; 7) de position entre la première et la seconde position.

6. Dispositif selon la revendication 5, **caractérisé en ce que** l'actionneur (3) est un élément ayant sensiblement la forme d'un cylindre circulaire creux destiné à être monté coaxialement par rapport aux deux pièces (1, 2).

7. Dispositif selon la revendication 5 ou 6,
**caractérisé en ce que** l'actionneur (3) est conformé pour pouvoir être disposé coaxialement par rapport à, et au moins partiellement entre, les deux pièces (1, 2).

8. Mécanisme, **caractérisé en ce qu'**il comprend un dispositif selon l'une quelconque des revendications 1 à 7.

9. Boîte de vitesses pour un véhicule automobile, **caractérisé en ce qu'**elle comprend un dispositif selon l'une quelconque des revendications 1 à 7.
